(19)

Europäisches
Patentamt

European
Patent Office

Office européen
des brevets

(11) **EP 3 530 623 A1**

(12) **EUROPEAN PATENT APPLICATION**

(43) Date of publication:
**28.08.2019 Bulletin 2019/35**

(51) Int Cl.:
**C01F 7/30** (2006.01)    **C01F 7/56** (2006.01)
**C01F 7/62** (2006.01)

(21) Application number: **18215564.8**

(22) Date of filing: **21.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.02.2018   AU 2018900572**

(71) Applicant: **Altech Chemicals Australia Pty Ltd.
Subiaco WA 6008 (AU)**

(72) Inventors:
• **TAN, Ignatius Kim Seng
   Churchlands WA 6018 (AU)**
• **LIU, Jingyuan
   Dalkeith WA 6009 (AU)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **A METHOD FOR THE PREPARATION OF ALUMINA**

(57)    A method for the preparation of alumina, the method comprising the steps of:
treating aluminous material to reduce particle size and increase the alumina content;
calcining the aluminous material;
leaching the aluminous material with hydrochloric acid;
solid liquid separation to provide a pregnant liquor;
crystallising aluminium chloride hexahydrate by adding hydrogen chloride gas, precipitating aluminium chloride hexahydrate and separating the aluminium chloride hexahydrate;
dissolving the aluminium chloride hexahydrate in water and repeating the crystallisation process at least once;
calcining aluminium chloride hexahydrate to provide alumina; and
finishing the alumina to either a bead or alumina powder.

Figure 1. Flow sheet

EP 3 530 623 A1

**Description**

TECHNICAL FIELD

The present invention relates to a method for the preparation of alumina.

BACKGROUND ART

The following discussion of the background art is intended to facilitate an understanding of the present invention only. The discussion is not an acknowledgement or admission that any of the material referred to is or was part of the common general knowledge as at the priority date of the application.

There are a number of industrial methods for producing high purity alumina. One of the most common methods is hydrolysis of aluminium alkoxide. In this process, high purity aluminium alkoxide is synthesised from aluminium metal and alcohol, and aluminium hydroxide is produced by hydrolysis of alkoxide, and finally high purity alumina is obtained by calcination. Choline hydrolysis of aluminium is another common method which involves the dissolution of aluminium powder to a hydroxide and then subsequent calcination to convert it back to an alumina ($Al_2O_3$) form. Both of the processes described above utilise pure aluminium metal as a feedstock.

SUMMARY OF INVENTION

In accordance with the present invention, there is provided a method for the preparation of alumina, the method comprising the steps of:

treating aluminous material to reduce particle size and increase the alumina content;

calcining the aluminous material;

leaching the aluminous material with hydrochloric acid;

solid liquid separation to provide a pregnant liquor;

crystallising aluminium chloride hexahydrate by adding hydrogen chloride gas, precipitating aluminium chloride hexahydrate and separating the aluminium chloride hexahydrate;

dissolving the aluminium chloride hexahydrate in water and repeating the crystallisation process at least once;

calcining aluminium chloride hexahydrate to provide alumina; and

finishing the alumina to either a bead or alumina powder.

Advantageously, the method of the present invention can be used to provide high purity alumina. Preferably, the alumina is 99.99 %.

Preferably, the bead is a high density bead. Preferably, the bead is about 2-5mm. Preferably, the bead has a loose bulk density of greater than about $2g/m^3$.

Preferably, the alumina powder is a fine alumina powder of less than 1 micron.

Preferably, the crystallisation process is conducted three times. For clarity, this would mean the following steps:

adding hydrogen chloride gas and precipitating aluminium chloride hexahydrate;

dissolving the aluminium chloride hexahydrate in water;

adding hydrogen chloride gas and precipitating aluminium chloride hexahydrate;

dissolving the aluminium chloride hexahydrate in water; and

adding hydrogen chloride gas and precipitating aluminium chloride hexahydrate.

Preferably, the aluminous material is an aluminous clay. More preferably, the aluminous material is kaolin.

Where the aluminous material is kaolin, the step of:

calcining the aluminous material;

advantageously forms metakaolin.

Preferably, the aluminous material contains less than 1.5 % iron.

Preferably, the step of:

treating aluminous material to reduce particle size and increase the alumina content;

comprises drum scrubbing the aluminous material in water.

Preferably, the step of:

treating aluminous material to reduce particle size and increase the alumina content;

further comprises screening the aluminous material to less than 0.3 mm particle size.

Advantageously, screening of the aluminous material removes significant portions of quartz material, thereby increasing the wt% of aluminium in the material.

Preferably, the step of:

treating aluminous material to reduce particle size and increase the alumina content;

increases the alumina content to over about 27 % $^w/_w$.

Preferably, the step of:

screening the aluminous material to less than 0.3 mm particle size;

further comprises solid liquid separation of the screened aluminous material.

Preferably, the step of:

calcining the aluminous material;

is conducted at a temperature of about 400 - 700 °C.

Preferably, the step of:

calcining the aluminous material;

is conducted for a period of 15 to 60 minutes.

Preferably, the step of:

calcining the aluminous material;

is conducted for a period of about 60 minutes.

Preferably, the step of:

calcining the aluminous material;

is conducted in a natural gas fired rotary kiln.

Preferably, the step of calcining the aluminous material, is preceded by the step of flash drying the aluminous material to remove at least a portion of the moisture in the aluminous material.

Preferably, the method of the present invention comprises the further step of: cooling the aluminous material to a temperature of less than about 80 °C after the step of:

calcining the aluminous material;

Advantageously, the hydrochloric acid dissolves the aluminium present and facilitates its separation from any remaining silica. The leachate may contain other impurities such as iron, titanium, sodium and potassium.

It will be appreciated that the concentration of the hydrochloric acid will depend on the type of acid itself as well as the nature of the aluminous material including particle size distribution and level of impurities. Preferably, the hydrochloric acid has a concentration of between 1 M and 9 M. More preferably, the hydrochloric acid has a concentration of between 3 M and 9 M. More preferably, the hydrochloric acid has a concentration of between 6 M and 9 M. More preferably, the hydrochloric acid has a concentration of about 9 M. It will be appreciated that the volume of hydrochloric acid will depend on the nature of the aluminous material including particle size distribution and level of impurities. Preferably the addition of the hydrochloric acid forms a mixture with a solid:liquid ratio of between 20 and 35 %.

The step of:

leaching the aluminous material with hydrochloric acid;

is preferably conducted at a temperature of between 70 °C and 110 °C.

Preferably, the aluminous material is leached for between 15 minutes and 1 hour. More preferably, the aluminous material is leached for about 1 hour.

Without being limited by theory, it is believed that the process of extraction of aluminium from kaolin into an HCl solution is best described by the equation;

$$Al_2O_3.2SiO_2.2H_2O \text{ (s)} + 6HCl \text{ (aq)} \rightarrow 2AlCl_3 \text{ (aq)} + 2SiO_2 \text{ (s)} + 5H_2O$$

It will be appreciated that the kaolin can be represented in a number of different ways. For the purpose of the present application, the equation detailed above is considered appropriate.

Preferably, the method of the present invention comprises the further step of: solid/liquid separation of the leached aluminous material.

Preferably the step of:

solid/liquid separation of the leached aluminous material;

comprises pressure filtration of the leached material to provide the pregnant leach solution and residue solids.

Preferably, the method of the present invention comprises the further step of: passing the pregnant leach solution through a polishing filter to remove undesired small particles.

Preferably, the method of the present invention comprises the further step of: neutralising the residue solids with a strong base such as limestone, hydrated lime or caustic soda.

In one form of the invention, the step of precipitation of aluminium chloride hexahydrate comprises evaporative crystallisation of the pregnant leach solution to provide aluminium chloride hexahydrate crystals.

Preferably, the step of precipitation of aluminium chloride hexahydrate further comprises addition of 35 % hydrochloric acid solution to provide further aluminium chloride hexahydrate crystals.

In one form of the invention, the step of precipitating aluminium chloride hexahydrate comprises hydrochloric gas sparging of the pregnant leach solution to provide aluminium chloride hexahydrate crystals.

Preferably the aluminium chloride hexahydrate crystals are filtered and washed with hydrochloric acid. The filtrate may be concentrated and recycled to the leaching stage for further use.

Preferably, the filtered aluminium chloride hexahydrate crystals are dissolved in water to provide a saturated solution of aluminium chloride. Preferably, the water is ultrapure water.

Preferably, the method of the present invention comprises the additional step of: hydro-pyrolysing the aluminium chloride hexahydrate crystals prior to the step of: calcining aluminium chloride hexahydrate to provide alumina.

Advantageously, the step of hydro-pyrolysing the aluminium chloride hexahydrate crystals removes physically bound hydrogen chloride as a gas.

Preferably, the step of calcining the aluminium chloride hexahydrate crystals comprises calcining at about 1100 °C to 1300 °C in a natural gas fed rotary kiln.

The method of the present invention may comprise the additional step of washing the alumina with a dilute weak clean acid and/or ultrapure water.

The method of the present invention may comprise the additional step of bead milling the washed alumina to less than 1 micron.

The method of the present invention may comprise the additional step of spray drying the alumina after milling.

The method of the present invention may comprise the additional step of pelletissing the spray dried alumina to a pellet size of about 2 - 5 mm. Preferably, the pellet size is about 2 mm.

The method of the present invention may comprise the additional step of calcining the alumina pellets at about 1500 °C to 1700 °C to a high density bead in a natural gas fired tunnel kiln.

As an alternative product route, the method of the present invention may comprise of deagglomerating the spray dried alumina to a fine alumina powder product.

BRIEF DESCRIPTION OF THE DRAWINGS

The present invention will now be described, by way of example only, with reference to one embodiment thereof, and the accompanying drawing, in which:-

Figure 1 is a schematic flow sheet depicting a process for the production of alumina in accordance with an embodiment of the invention;

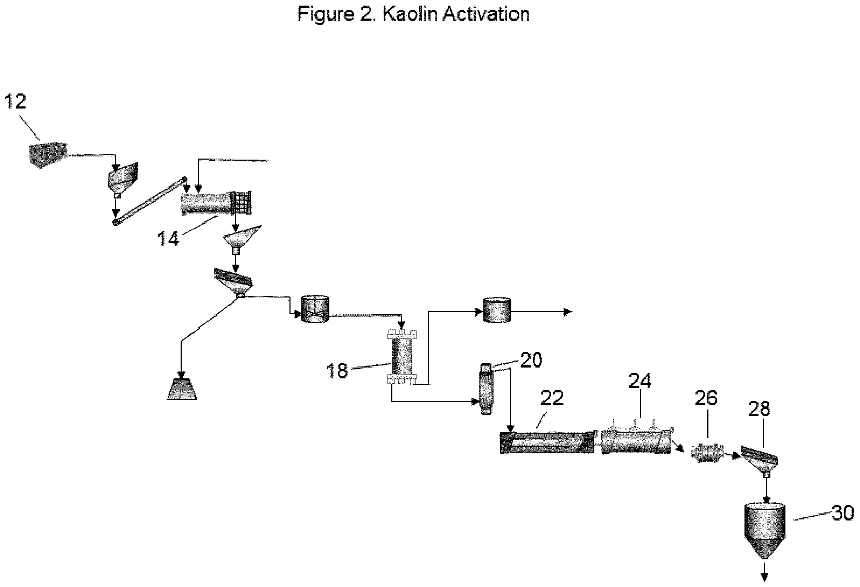

Figure 2 is a detailed schematic flow sheet depicting the kaolin activation portion of the process for the production of alumina in accordance with an embodiment of the invention;

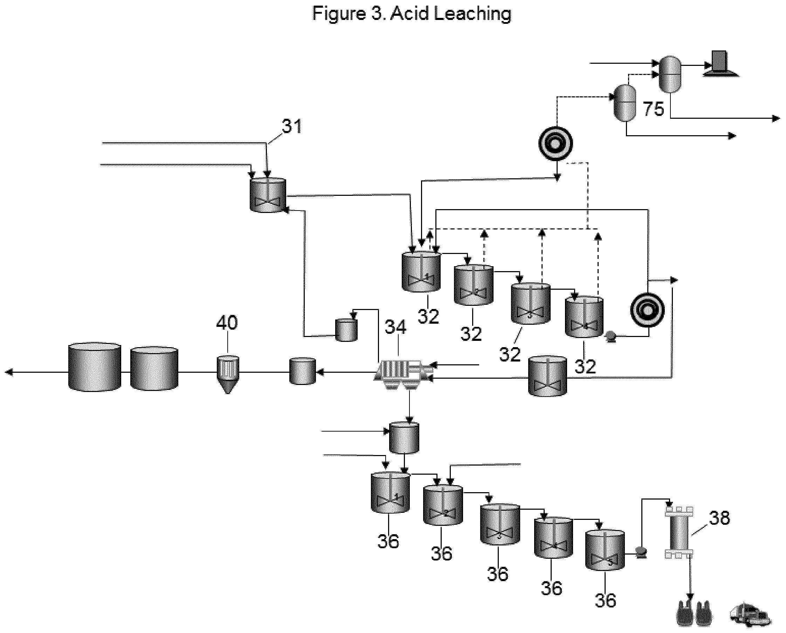

Figure 3 is a detailed schematic flow sheet depicting the acid leaching portion of the process for the production of alumina in accordance with an embodiment of the invention;

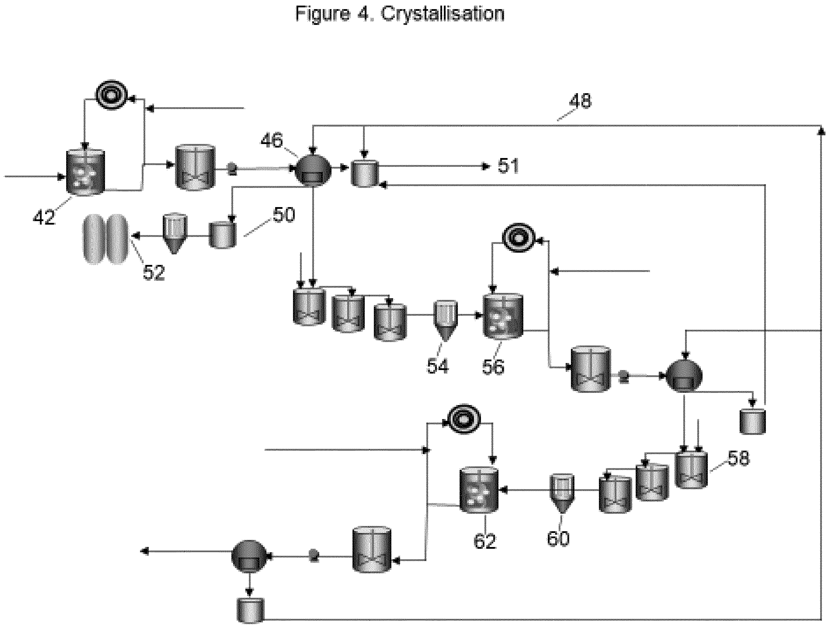

Figure 4 is a detailed schematic flow sheet depicting the crystallisation portion of the process for the production of alumina in accordance with an embodiment of the invention; and

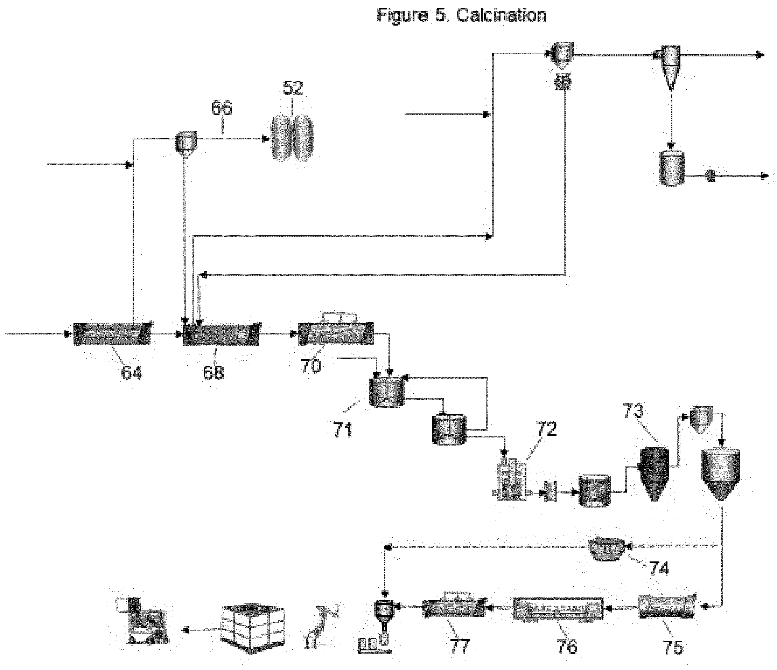

Figure 5 is a detailed schematic flow sheet depicting the calcination and final product portion of the process for the production of alumina in accordance with an embodiment of the invention.

DESCRIPTION OF EMBODIMENTS

Those skilled in the art will appreciate that the invention described herein is susceptible to variations and modifications other than those specifically described. It is to be understood that the invention includes all such variations and modifications. The invention also includes all of the steps, features, compositions and compounds referred to or indicated in the specification, individually or collectively and any and all combinations or any two or more of the steps or features.

The present invention is not to be limited in scope by the specific embodiments described herein, which are intended for the purpose of exemplification only. Functionally equivalent products, compositions and methods are clearly within the scope of the invention as described herein.

The entire disclosures of all publications (including patents, patent applications, journal articles, laboratory manuals, books, or other documents) cited herein are hereby incorporated by reference.

Throughout this specification, unless the context requires otherwise, the word "comprise" or variations such as "comprises" or "comprising", will be understood to imply the inclusion of a stated integer or group of integers but not the exclusion of any other integer or group of integers.

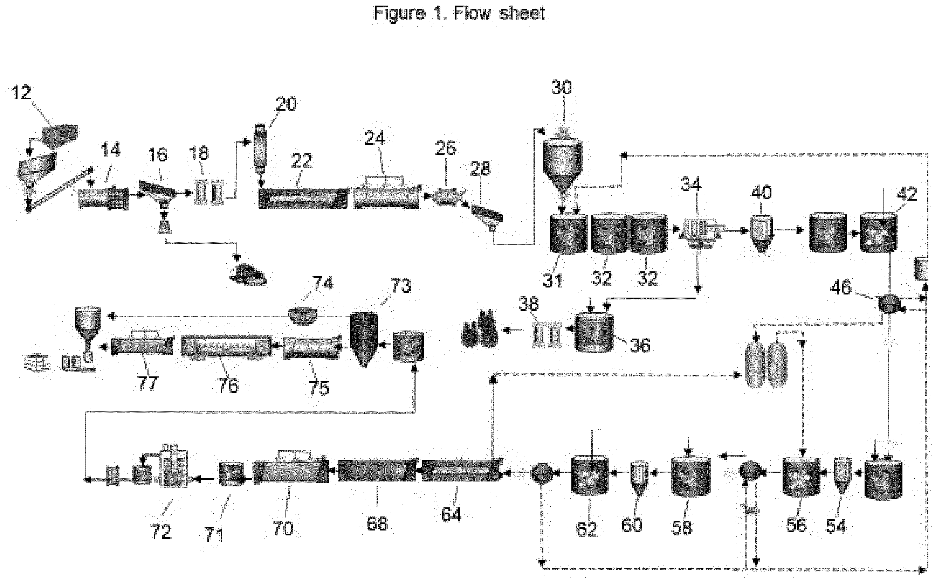

In Figure 1 there is shown a process for the production of high purity alumina. All of the unit operations in the process are designed to operate continuously with full process instrumentation and control being provided for.

Run-of-mine (ROM) un-beneficiated ore 12 is concentrated to a minimum 27 % aluminium as alumina by means of physical methods such as drum scrubbing 14 the ore to separate aluminous and gangue material and screening 16 to obtain particle sizes less than about 0.3 mm. The beneficiated ore having at least 27 % alumina is pressure filtered 18 to form a filter cake.

The aluminous ore filter cake is dried in a flash drying column 20 from where it is transferred for calcination in a natural gas fired kiln 22 operating at 700 °C for a residence time of 15 minutes to 60 minutes, more preferably 60 minutes.

The calcined aluminous ore is cooled to less than about 80 °C by means of indirect water assisted cooling system 24.

The cooled calcined aluminous ore is crushed/milled 26 to less than 300 $\mu$m and screened 28 again to remove any oversize particles. The ore is stored in a calcined storage area 30 before subsequent leaching.

The ground calcined ore is leached with hydrochloric acid 31 of at least 20 % strength at approximately 105 °C in a series of acid leach vessels 32 for 30 minutes to 2 hours, preferably 1 hour to provide a leach slurry. Preferably, there are provided four leach vessels and the residence time in each vessel is about 15 minutes.

Vent gas from heating or cooling leached slurry is scrubbed in the gas scrubbing system 75.

The leached slurry is cooled to 80 °C and transferred to a series of pressure filters 34 where the pregnant leach solution is separated from the solid residue. The residue solids are neutralised in neutralisation tanks 36 using quicklime, hydrated lime or limestone or such similar alkaline media. The neutralised solid residues are filtered 38 and disposed of accordingly.

The pregnant leach solution from the pressure filters 34 is sent to a polishing filter 40 to remove any suspended solid particles and provide a pregnant leach solution. Preferably, there are provided two polishing filters. The pregnant leach solution from the polishing filter 40 not only contains the desired aluminium chloride but may also contain other leached impurities such as iron, magnesium, manganese, calcium, sodium and potassium.

The pregnant leach solution is subjected to hydrochloric acid gas sparging 42 crystallisation to carefully crystallise aluminium chloride hexahydrate crystals by increasing the HCl concentration of the pregnant leach solution. The solubility of aluminium chloride decreases with increased HCl acid concentration. The crystallisation is conducted such that the increased acid concentration results in around 90-97 % of the aluminium being crystallised as aluminium chloride hexahydrate. The majority of the impurities remain in solution.

The crystallised aluminium chloride hexahydrate from the crystallisation process is centrifuged 46 and washed with stage 3 crystallisation spent liquor solution 48. The stage 1 spent liquor 50 is re-cycled to the hydrogen chloride recovery plant 52, while the wash liquor is recycled to the leach solution 51.

The aluminium chloride hexahydrate crystals are re-dissolved in ultrapure water to provide a saturated solution of aluminium chloride (approximately 27 %). The aluminium chloride solution is filtered through a polishing filter 54 to remove any solid impurities or undissolved crystals.

The purified aluminium chloride solution at 60 °C is passed through a second HCl gas sparging crystallisation stage 56. It is subjected to a controlled crystallisation process to increase the HCl concentration to about 30 % and carefully crystallise aluminium chloride hexahydrate crystals by increasing the acid concentration of the aluminium chloride solution in such a way that about 90-97 % aluminium chloride is crystallised as hexahydrate, the majority of those impurities present remaining in solution.

The crystallised aluminium chloride hexahydrate crystals from the above HCl gas sparging crystallisation process are centrifuged and washed with stage 3 crystallisation spent liquor 48. The stage 2 spent and wash liquors are re-cycled to the leach solution 51.

The aluminium chloride hexahydrate crystals thus obtained are re-dissolved 58 in ultrapure water to provide a saturated solution of aluminium chloride. The aluminium chloride solution is filtered through a polishing filter 60 to remove any solid impurities or undissolved aluminium chloride crystals.

The purified aluminium chloride solution is passed through a third stage of HCl gas sparging crystallisation process 62. It is subjected to a controlled crystallisation process to carefully crystallise aluminium chloride hexahydrate crystals by increasing the acid concentration of the aluminium chloride solution in such a way that about 90-97 % aluminium chloride is crystallized as hexahydrate whereas most of the other impurities having higher solubility in water than aluminium chloride remain in the spent liquor.

The crystallised aluminium chloride hexahydrate crystals from the above crystallisation process are centrifuged. The spent liquor is re-cycled to the leach solution.

The aluminium chloride hexahydrate crystals thus obtained are high purity aluminium chloride hexahydrate crystals having purity of 99.999%.

The purified aluminium chloride hexahydrate crystals are subjected to roasting at 700 °C in a natural gas fired indirect rotary kiln 64. Aluminium chloride hexahydrate decomposes at this temperature to yield a mixture of aluminium hydroxide and aluminium oxide releasing hydrogen chloride vapour and steam. The hydrogen chloride vapour is recycled to a hydrogen chloride recovery plant 52.

The mixture of aluminium hydroxide and aluminium oxide obtained through the roasting process is subjected to high temperature calcining at 1100 °C to 1300 °C 68 to remove remaining water and provide high purity alpha alumina.

High purity alumina is cooled to room temperature 70 and washed in a weak clean acid or ultra pure water in two stage counter current washing tanks 71 for about 60 minutes to reduce sodium and potassium and other contaminents and to yield a high purity alumina slurry.

High purity alumina slurry is milled in a series of bead mills 72 filled with high purity alumina beads to reduce the alumina particle size to less than 1 micron.

Milled slurry is then dried in a spray dryer 73 to remove moisture and yield high purity alumina having purity of 99.99%.

Alternatively, high purity alumina thus obtained having purity 99.99 % may be pelletised by addition of ultra pure water in a pelletiser drum 75 to a pellet size of 2-5mm. Preferrably the pellet size is 2mm.

High purity alumina pellets are then calcined in a natural gas fired tunnel kiln 76 at a temperature of about 1650 °C to increase the bulk density of the final alumina product. Calcined pellets are then passed through a cooling section 77 on the discharge of the tunnel kiln to reduce the pellet temperature to below 60 °C.

Pelletised high density beads high purity alumina (HPA) are then packaged in air tight paper bags with polyethylene lining of required content.

As an alternative product route, spray dried high purity alumina thus obtained having purity 99.99 % may be deagglomerated using a jet mill 74 to the required particle size as per specifications from customer, producing fine alumina powder.

Deagglomerated fine alumina powder is then packaged in air tight paper bags with polyethylene lining of required content.

**Claims**

1. A method for the preparation of alumina, the method comprising the steps of:

   treating aluminous material to reduce particle size and increase the alumina content;
   calcining the aluminous material;
   leaching the aluminous material with hydrochloric acid;
   solid/liquid separation to provide a pregnant liquor;
   crystallising aluminium chloride hexahydrate by adding hydrogen chloride gas, precipitating aluminium chloride hexahydrate and separating the aluminium chloride hexahydrate;
   dissolving the aluminium chloride hexahydrate in water and repeating the crystallisation process at least once;
   calcining aluminium chloride hexahydrate to provide alumina; and
   finishing the alumina to either a bead or alumina powder.

2. A method for the preparation of alumina according to claims 1, wherein

   (i) the bead has a loose bulk density of greater than 2g/m$^3$ or
   (ii) the alumina powder has a diameter of less than 1 micron.

3. A method for the preparation of alumina according to any one of the preceding claims, wherein the crystallisation process is conducted three times.

4. A method for the preparation of alumina according to any one of the preceding claims , wherein aluminous material is an aluminous clay or
   wherein the aluminous material is kaolin.

5. A method for the preparation of alumina according to any one of the preceding claims, wherein the step of:

   treating aluminous material to reduce particle size and increase the alumina content;
   comprises drum scrubbing the aluminous material in water.

6. A method for the preparation of alumina according to any one of the preceding claims, wherein the step of:

   treating aluminous material to reduce particle size and increase the alumina content;
   comprises screening the aluminous material to less than 0.3 mm particle size.

7. A method for the preparation of alumina according to any one of the preceding claims, wherein the step of:

   calcining the aluminous material;
   is conducted at a temperature of about 400 - 700 °C.

8. A method for the preparation of alumina according to any one of the preceding claims, wherein

   (i) the hydrochloric acid has a concentration of about 9 M, or
   (ii) the addition of the hydrochloric acid forms a mixture with a solid:liquid ratio of between 20 and 35 %.

9.  A method for the preparation of alumina according to any one of the preceding claims, wherein the step of:

    leaching the aluminous material with hydrochloric acid;
    is conducted at a temperature of between 70 °C and 110 °C.

10. A method for the preparation of alumina according to any one of the preceding claims, wherein the aluminous material is leached for about 1 hour.

11. A method for the preparation of alumina according to any one of the preceding claims, wherein the step of:
    solid/liquid separation of the leached aluminous material;
    comprises pressure filtration of the leached material to provide the pregnant leach solution and residue solids.

12. A method for the preparation of alumina according to any one of the preceding claims, wherein the step of precipitating aluminium chloride hexahydrate comprises hydrochloric gas sparging of the pregnant leach solution to provide aluminium chloride hexahydrate crystals, preferably
    wherein the aluminium chloride hexahydrate crystals are centrifuged and washed with hydrochloric acid, preferably wherein the filtered aluminium chloride hexahydrate crystals are dissolved in water to provide a saturated solution of aluminium chloride hexahydrate.

13. A method for the preparation of alumina according to any one of the preceding claims, wherein the method comprises the additional step of:
    hydro-pyrolysing the aluminium chloride hexahydrate crystals prior to the step of:
    calcining aluminium chloride hexahydrate to provide alpha alumina.

14. A method for the preparation of alumina according to anyone of the preceding claims, wherein the method of the present invention comprises the additional step of:
    finishing alumina in either a high density bead or fine alumina powder.

Figure 1. Flow sheet

Figure 2. Kaolin Activation

12 14 18 20 22 24 26 28 30

Figure 3. Acid Leaching

Figure 4. Crystallisation

Figure 5. Calcination

# EUROPEAN SEARCH REPORT

Europäisches
Patentamt
European
Patent Office
Office européen
des brevets

Application Number

EP 18 21 5564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2014 259 596 A1 (AUSTRALIAN RESOURCE MAN GROUP PTY LTD) 4 June 2015 (2015-06-04) * the whole document * | 1-14 | INV. C01F7/30 C01F7/56 C01F7/62 |
| A | US 2017/260062 A1 (BOUDREAULT RICHARD [CA] ET AL) 14 September 2017 (2017-09-14) * figure 1 * * paragraph [0286] * | 1-14 | |
| A | WO 2014/094155 A1 (POLAR SAPPHIRE LTD [CA]) 26 June 2014 (2014-06-26) * figure 1 * * paragraphs [0016], [0033], [0037], [0043] * | 1-14 | |
| A | EISNER D ET AL: "Alumina via hydrochloric acid leaching of high silica bauxites - process development", TMS ANNUAL MEETING, METALLURGICAL SOCIETY OF AIME, vol. 113th, 1984, pages 411-426, XP009514106, * figure 1; table V * * pages 414-423 * | 1-14 | TECHNICAL FIELDS SEARCHED (IPC) C01F |

The present search report has been drawn up for all claims

| Place of search | Date of completion of the search | Examiner |
|---|---|---|
| Munich | 28 June 2019 | Stratford, Katja |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 21 5564

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2019

| Patent document cited in search report | | Publication date | Patent family member(s) | | Publication date |
|---|---|---|---|---|---|
| AU 2014259596 | A1 | 04-06-2015 | NONE | | |
| US 2017260062 | A1 | 14-09-2017 | US 2017260062 A1 | | 14-09-2017 |
| | | | WO 2016049777 A1 | | 07-04-2016 |
| WO 2014094155 | A1 | 26-06-2014 | CA 2895229 A1 | | 26-06-2014 |
| | | | CN 104903241 A | | 09-09-2015 |
| | | | CN 107572569 A | | 12-01-2018 |
| | | | US 2015368117 A1 | | 24-12-2015 |
| | | | WO 2014094155 A1 | | 26-06-2014 |

EPO FORM P0459

For more details about this annex : see Official Journal of the European Patent Office, No. 12/82